# EUROPÄISCHE PATENTSCHRIFT

(11) **EP 2 652 195 B1**
(45) Veröffentlichungstag und Bekanntmachung des Hinweises auf die Patenterteilung: **07.01.2015**
(21) Anmeldenummer: 11785669.0
(22) Anmeldetag: 21.11.2011
(51) Int. Cl.: D21D 5/16

(54) **SIEB**
STRAINER
TAMIS

(30) Priorität: 16.12.2010 DE 102010063231; 16.12.2010 DE 202010016701 U
(43) Veröffentlichungstag der Anmeldung: 23.10.2013
(73) Patentinhaber: Voith Patent GmbH, 89520 Heidenheim (DE)
(72) Erfinder: GOTTSCHALK, Gerd, 88214 Ravensburg (DE)
(86) Internationale Anmeldenummer: PCT/EP2011/070567
(87) Internationale Veröffentlichungsnummer: WO 2012/079917

(56) Entgegenhaltungen:
- EP-A1- 0 651 091
- WO-A1-2008/131974
- DE-A1- 3 336 874

## Beschreibung

Die Erfindung betrifft ein Sieb für die Behandlung einer zur Faserstoffbahnerzeugung geeigneten Faserstoffsuspension, bestehend aus mindestens zwei miteinander verbundenen und Durchbrüche aufweisenden Siebschichten, wobei die Durchbrüche durch das Sieb führenden Sieböffnungen bilden und die Durchbrüche wenigstens einer Siebschicht wesentlich kleiner als die einer anderen Siebschicht sind, wobei mehrere kleine Durchbrüche einer Siebschicht voll umfänglich in einen großen Durchbruch der anderen Siebschicht münden. Ein derartiges Sieb ist aus dem Dokument DE 333 6874 A1 bekannt.

Derartige Siebe werden vorzugsweise zur Nasssiebung von Faserstoffsuspensionen verwendet, um darin vorhandene Störstoffe zu entfernen.

Die Charakteristik eines solchen Siebes ergibt sich im Wesentlichen aus Größe, Form und Anzahl der sich darin befindlichen Sieböffnungen.

Verwendet werden diese Siebe mit Vorteil in Stofflösern und Sortierern zur Aufbereitung.

Neben einem großen Durchsatz wird dabei auch eine hohe Festigkeit gegen den hydraulischen Druck angestrebt.

Um dem gerecht zu werden, wird in der DE19547585 ein Sieb mit einer Stütz- und einer Sortierschicht vorgeschlagen.

Problematisch bleiben dabei die Sieböffnungen, insbesondere hinsichtlich Herstellung, Durchsatz und Verstopfungsgefahr.

Die Aufgabe der Erfindung ist es daher bei diesen Sieben die offene Fläche ohne wesentliche Beeinträchtigung der Stabilität zu vergrößern.

Erfindungsgemäß wurde die Aufgabe dadurch gelöst, dass Abschnitte des Umfangs des großen Durchbruchs deckungsgleich mit zumindest jeweils einem Abschnitt des Umfangs mehrerer kleinerer Durchbrüche ist.

Bei der Siebschicht mit den großen Durchbrüchen ergibt sich durch die teilweise Deckungsgleichheit eine relativ große offene Fläche. Dies wird noch dadurch unterstützt, dass die kleinen Durchbrüche voll umfänglich in die großen Durchbrüche münden. Dies bedeutet, dass die kleinen Durchbrüche auch nicht teilweise durch die Siebschicht mit den großen Durchbrüchen abgedeckt werden.

Die Deckungsgleichheit gewährleistet auch die maximale Ausnutzung der Siebschicht mit den großen Durchbrüchen hinsichtlich der von dieser Schicht ausgehenden Stabilität.

Dabei vereinfacht sich durch den mehrschichtigen Aufbau des Siebes der Herstellungsaufwand erheblich.

Hierzu sollten die Durchbrüche vor dem Verbinden der Siebschichten in diese eingebracht werden.

Während das Sieb mit Vorteil eine Gesamtdicke zwischen 4 und 100 mm, vorzugsweise zwischen 10 und 50 mm hat, haben die Siebschichten eine Dicke zwischen 1 und 40 mm.

Wegen der geringen Dicke der Siebschichten lassen sich die Durchbrüche für die Siebschichten viel einfacher und genauer herstellen. Außerdem ermöglicht dies auch die Gestaltung komplizierter Formen für die Sieböffnungen mit vertretbarem Aufwand.

Die vorzugsweise flächige Verbindung der Siebschichten ist mittel Schrauben, Kleben, Löten, Schweißen u.ä. möglich.

Die Durchbrüche lassen sich insbesondere durch Fräsen, Bohren, Ätzen, Erodieren oder Laserschneiden herstellen.

Dabei können rotationssymmetrische, aber auch nicht-rotationssymmetrische Sieböffnungen, wie Langlöcher, Rechtecke, Rauten, Sechsecke oder andere Polygone relativ einfach realisiert werden.

Vorteilhaft ist es jedoch, wenn der Strömungsquerschnitt der Durchbrüche wenigstens einer Siebschicht, vorzugsweise aller Siebschichten keine Ecken besitzt. Eine gleichmäßige Kontur der Durchbrüche wirkt sich nämlich positiv auf die Durchströmung aus.

Im Interesse einer optimalen Ausnutzung der Siebfläche, aber auch einer einfachen Herstellbarkeit ist es von Vorteil, wenn die kleinen Durchbrüche einen kreisrunden Strömungsquerschnitt aufweisen.

Allerdings kann ebenso Vorteile bezüglich der Sortierwirkung bieten, wenn die kleinen Durchbrüche einen länglichen, insbesondere ovalen Strömungsquerschnitt aufweisen, wobei der Umfang der kleinen Durchbrüche wenigstens einen, vorzugsweise mehrere gerade Abschnitte und/oder der Umfang der kleinen Durchbrüche mehrere, vorzugsweise ausschließlich gekrümmte Abschnitte besitzt.

Bei den großen Durchbrüchen sollte der Umfang zur optimalen Nutzung der Fläche zumindest einen, vorzugsweise mehrere gerade Abschnitte und/oder mehrere, vorzugsweise ausschließlich gekrümmte Abschnitte besitzen. Dabei kann die meist das Sieb stützende Fläche der Siebschicht mit den großen Durchbrüchen möglichst groß gestaltet werden, wenn wenigstens ein Abschnitt konkav gekrümmt ist.

In Abhängigkeit von den Anforderungen an das Sieb, deren mechanischer Belastung und der Beschaffenheit der Suspension kann es von Vorteil sein, wenn zumindest in einigen Fällen, vorzugsweise überwiegend nur zwei, drei oder vier kleine Durchbrüche in einen großen Durchbruch münden.

Insbesondere wenn mehr als zwei kleine Durchbrüche in einen großen Durchbruch münden, ist es zur optimalen Flächennutzung vorteilhaft, wenn der große Durchbruch einen etwa polygonförmigen Strömungsquerschnitt hat.

Ein Optimum zwischen der Anzahl der Siebschichten und den damit verbundenen Vorteilen einer geringen Dicke und dem zusätzlichen Aufwand für die Herstellung der Durchbrüche und das Verbinden der Siebschichten ergibt sich je nach Material und den Anforderungen an das Sieb, wenn das Sieb aus zwei oder mehr als zwei Siebschichten besteht.

Zur Behandlung der Faserstoffsuspension sollten die Sieböffnungen an der engsten Stelle eine Ausdehnung zwischen 1 und 20 mm, vorzugsweise zwischen 4 und 12 mm haben.

Außerdem ist es für diese Anwendung auch von Vorteil, wenn das Sieb starr ausgebildet ist.

Im Interesse einer langen Lebensdauer des Siebes sollte zumindest die, die Vorderseite des Siebes bildende Siebschicht eine höhere Verschleißfestigkeit als andere Siebschichten aufweisen.

Um die Herstellungskosten zu minimieren kann es ebenso von Vorteil sein, wenn die Siebschichten nicht aus dem gleichen Material bestehen. So kann das Material besser an die Erfordernisse angepasst werden, wobei neben Metall, insbesondere auch Kunststoff oder Keramik zum Einsatz gelangen kann.

Für den ungehinderten Durchfluss sollten die Seitenwände insbesondere beim Übergang zwischen den Siebschichten stetig verlaufen.

Im Interesse einer einfachen Herstellung ist es ebenso vorteilhaft, wenn alle Sieböffnungen einer Siebschicht gleich ausgebildet sind.

Nachfolgend soll die Erfindung an mehreren Ausführungsbeispielen näher erläutert werden. In der beigefügten Zeichnung zeigt:
Figur 1a-d: eine Draufsicht auf ein Sieb mit unterschiedlich gestalteten Durchbrüchen 3,4;
Figur 2: einen Teilquerschnitt durch ein Sieb und
Figur 3: eine bevorzugte Anorndung der Durchbrüche 3,4.

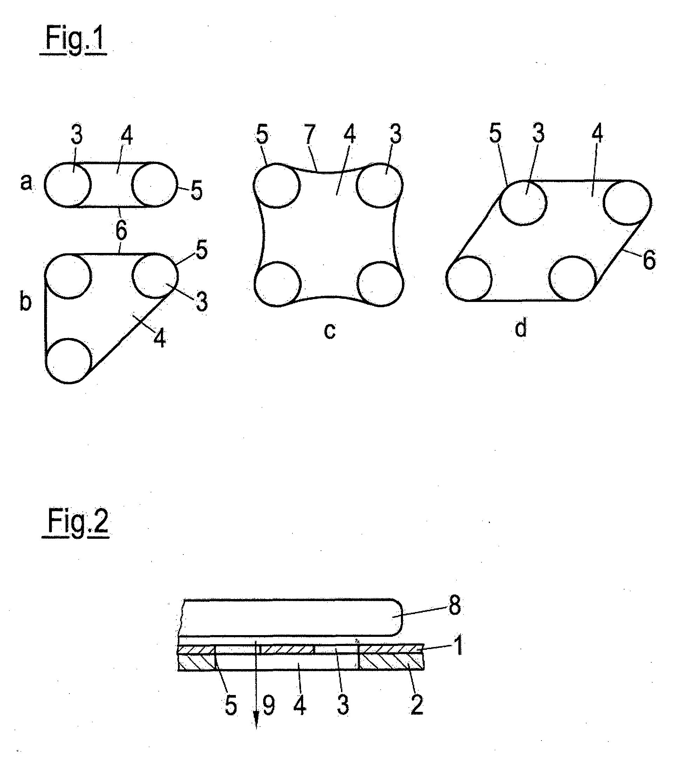

Gemeinsam ist allen Ausführungen, dass das starre Sieb eines Stofflösers einer Anordnung zur Aufbereitung einer Faserstoffsuspension für eine Papiermaschine aus zwei Siebschichten 1,2 besteht. Dabei ist gemäß Figur 2 in Durchströmungsrichtung 9 vor dem Sieb ein Rotor 8 als Siebräumer angeordnet.

Die Siebschichten 1,2 sind miteinander verlötet, wobei die tragende Siebschicht 2 eine Dicke zwischen 5 und 40, vorzugsweise zwischen 8 und 30 mm und die andere Siebschicht 1 eine Dicke zwischen 1 und 20, vorzugsweise zwischen 5 und 15 mm hat. Vor dem Verbinden der Siebschichten 1,2 werden in diese jedoch Durchbrüche 3,4 mittels Laserschweißen eingebracht, welche beim Sieb durchgehende Sieböffnungen bilden.

Wegen der geringen Dicke der Siebschichten 1,2 lassen sich die Durchbrüche 3,4 relativ einfach und genau herstellen.

Um den Verschleiß zu minimieren, ist die, die Vorderseite bildende Siebschicht 1 aus sehr verschleißfestem Material. Die darunter liegende Siebschicht 2 muss die Stabilität des Siebes sicherstellen und kann insbesondere aus preiswerterem und/oder leichterem Material bestehen.

Wesentlich ist hierbei, dass die Siebschichten 1,2 Durchbrüche 3,4 aufweisen, welche durch das Sieb führenden Sieböffnungen bilden. Dabei sind die Durchbrüche 3 der vorderen, d.h. der entgegen der Strömungsrichtung 9 weisenden Siebschicht 1 wesentlich kleiner als die Durchbrüche 4 der anderen Siebschicht 2.

Des Weiteren münden mehrere kleine Durchbrüche 3 der vorderen Siebschicht 1 jeweils voll umfänglich in einen großen Durchbruch 4 der anderen Siebschicht 2, wobei der Umfang des großen Durchbruchs 4 deckungsgleich mit zumindest jeweils einem Abschnitt 5 des Umfangs mehrerer kleinerer Durchbrüche 3 ist.

Hierdurch wird eine große Stabilität bei der tragenden, hinteren Siebschicht 2 verbunden mit einer möglichst großen offenen Fläche bei der für die Siebwirkung entscheidenden vorderen Siebschicht 1 gewährleistet.

Beispielhaft sind die kleinen Durchbrüche 3 gemäß Figur 1 auch wegen der einfachen Herstellung kreisrund.

Um den Durchfluss nicht zu beeinträchtigen, liegen die Durchbrüche 3,4, wie in Figur 2 deutlich zu sehen, in mehreren Abschnitten 5 fluchtend übereinander.

In Figur 1a-d werden verschieden gestaltete große Durchbrüche 4 gezeigt. Bei der Ausführung gemäß 1a münden nur zwei kleine Durchbrüche 3 in einen großen Durchbruch 4. Dementsprechend hat der große Durchbruch 4 eine etwa ovale Form.

Bei Figur 1b ist jeweils drei kleinen Durchbrüchen 3 ein großer Durchbruch 4 zugeordnet. Dabei ist der große Durchbruch 4 einem Dreieck ähnlich, wobei es drei gerade Abschnitte 6 und drei gekrümmte Abschnitte gibt. Die gekrümmten Abschnitte 5 sind fluchtend zu den kleinen, kreisrunden Durchbrüchen 3 ausgebildet.

Entsprechend den Figuren 1 c+d können durchaus auch vier kleine Durchbrüche 3 in einen großen Durchbruch 4 münden, wobei der große Durchbruch 4 dann einen etwa viereckigen Querschnitt hat. Auch hier werden die Eckpunkte von gekrümmten Abschnitten 5 gebildet, die mit den kreisrunden, kleinen Durchbrüchen 3 fluchten.

Während bei Figur 1d zwischen diesen Eckpunkten gerade Abschnitte 6 verlaufen, sind diese Abschnitte 7 bei Figur 1c konkav gekrümmt.

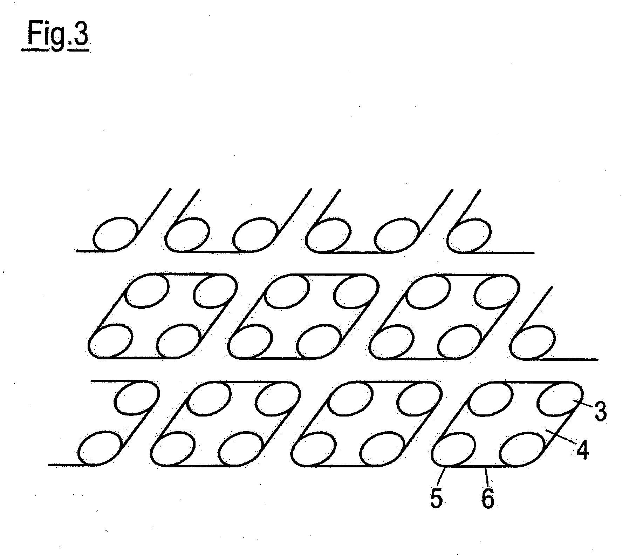

Figur 3 zeigt eine bevorzugte Anordnung mehrerer, gleich gestalteter großer Durchbrüche 4 in parallelen Reihen nebeneinander. Dabei sind die kleinen Durchbrüche 3 etwa oval und in mehreren parallelen und versetzt zueinander angeordneten Reihen angeordnet. In die großen Durchbrüche 4 münden jeweils vier kleine Durchbrüche 3, so daß die großen Durchbrüche 4 abgesehen von den durch die kleinen Durchbrüche 3 bestimmten runden Eckbereichen die Form eines Parallelogramms, insbesondere einer Raute haben.

## Patentansprüche

1. Sieb für die Behandlung einer zur Faserstoffbahnerzeugung geeigneten Faserstoffsuspension, bestehend aus mindestens zwei miteinander verbundenen und Durchbrüche (3,4) aufweisenden Siebschichten (1,2), wobei die Durchbrüche (3,4) durch das Sieb führenden Sieböffnungen bilden und die Durchbrüche (3) wenigstens einer Siebschicht (1) wesentlich kleiner als die (4) einer anderen Siebschicht (2) sind, wobei mehrere kleine Durchbrüche (3) einer Siebschicht (1) voll umfänglich in einen großen Durchbruch (4) der anderen Siebschicht (2) münden **dadurch gekennzeichnet, dass** Abschnitte des Umfangs des großen Durchbruchs (4) deckungsgleich mit zumindest jeweils einem Abschnitt (5) des Umfangs mehrerer kleinerer Durchbrüche (3) ist.

2. Sieb nach Anspruch 1, **dadurch gekennzeichnet, dass** der Strömungsquerschnitt der Durchbrüche (3,4) wenigstens einer Siebschicht (1,2), vorzugsweise aller Siebschichten (1,2) keine Ecken besitzt.

3. Sieb nach Anspruch 1 oder 2, **dadurch gekennzeichnet, dass** die kleinen Durchbrüche (3) einen kreisrunden Strömungsquerschnitt aufweisen.

4. Sieb nach Anspruch 1 oder 2, **dadurch gekennzeichnet, dass** die kleinen Durchbrüche (3) einen länglichen, insbesondere ovalen Strömungsquerschnitt aufweisen.

5. Sieb nach Anspruch 4, **dadurch gekennzeichnet, dass** der Umfang der kleinen Durchbrüche (3) wenigstens einen, vorzugsweise mehrere gerade Abschnitte besitzt.

6. Sieb nach Anspruch 4 oder 5, **dadurch gekennzeichnet, dass** der Umfang der kleinen Durchbrüche (3) mehrere, vorzugsweise ausschließlich gekrümmte Abschnitte besitzt.

7. Sieb nach einem der vorhergehenden Ansprüche, **dadurch gekennzeichnet, dass** der Umfang der großen Durchbrüche (4) zumindest einen, vorzugsweise mehrere gerade Abschnitte (6) besitzt.

8. Sieb nach einem der vorhergehenden Ansprüche, **dadurch gekennzeichnet, dass** der Umfang der großen Durchbrüche (4) mehrere, vorzugsweise ausschließlich gekrümmte Abschnitte besitzt.

9. Sieb nach Anspruch 8, **dadurch gekennzeichnet, dass** wenigstens ein Abschnitt (7) konkav gekrümmt ist.

10. Sieb nach einem der vorhergehenden Ansprüche, **dadurch gekennzeichnet, dass** zumindest in einigen Fällen, vorzugsweise überwiegend nur zwei kleine Durchbrüche (3) in einen großen Durchbruch (4) münden.

11. Sieb nach einem der vorhergehenden Ansprüche, **dadurch gekennzeichnet, dass** zumindest in einigen Fällen, vorzugsweise überwiegend nur drei kleine Durchbrüche (3) in einen großen Durchbruch (4) münden.

12. Sieb nach einem der vorhergehenden Ansprüche, **dadurch gekennzeichnet, dass** zumindest in einigen Fällen, vorzugsweise überwiegend nur vier kleine Durchbrüche (3) in einen großen Durchbruch (4) münden.

13. Sieb nach einem der vorhergehenden Ansprüche, **dadurch gekennzeichnet, dass** der große Durchbruch (4) einen polygonförmigen Strömungsquerschnitt hat.

14. Sieb nach einem der vorhergehenden Ansprüche, **dadurch gekennzeichnet, dass** das Sieb aus zwei Siebschichten (1,2) besteht.

15. Sieb nach einem der Ansprüche 1 bis 13, **dadurch gekennzeichnet, dass** das Sieb aus mehr als zwei Siebschichten (1,2) besteht.

16. Sieb nach einem der vorhergehenden Ansprüche, **dadurch gekennzeichnet, dass** das Sieb eine Gesamtdicke zwischen 4 und 100 mm, vorzugsweise zwischen 10 und 50 mm hat.

17. Sieb nach einem der vorhergehenden Ansprüche, **dadurch gekennzeichnet, dass** die Sieböffnungen an der engsten Stelle eine Ausdehnung zwischen 1 und 20 mm, vorzugsweise zwischen 4 und 12 mm haben.

18. Sieb nach einem der vorhergehenden Ansprüche, **dadurch gekennzeichnet, dass** es starr ausgebildet ist.

19. Sieb nach einem der vorhergehenden Ansprüche, **dadurch gekennzeichnet, dass** die Siebschichten (1,2) nicht aus dem gleichen Material bestehen, wobei die, die Vorderseite des Siebes bildende Siebschicht (1) eine höhere Verschleißfestigkeit als andere Siebschichten (2) aufweist.

## Claims

1. Screen for the treatment of a fibrous suspension suitable for fibrous web production, comprising at least two screen layers (1, 2) connected to one another and having apertures (3, 4), the apertures (3, 4) forming screen openings leading through the screen, and the apertures (3) of at least one screen layer (1) being substantially smaller than those (4) of another screen layer (2), a plurality of small apertures (3) of one screen layer (1) opening over their full extent into a large aperture (4) of the other screen layer (2),
**characterized in that**
sections of the circumference of the large aperture (4) are congruent with at least respectively one section (5) of the circumference of a plurality of small apertures (3).

2. Screen according to Claim 1, **characterized in that** the flow cross section of the apertures (3, 4) of at least one screen layer (1, 2), preferably of all the screen layers (1, 2), has no corners.

3. Screen according to Claim 1 or 2, **characterized in that** the small apertures (3) have a circular flow cross section.

4. Screen according to Claim 1 or 2, **characterized in that** the small apertures (3) have an elongated, in particular oval, flow cross section.

5. Screen according to Claim 4, **characterized in that** the circumference of the small apertures (3) has at least one straight section, preferably a plurality thereof.

6. Screen according to Claim 4 or 5, **characterized in that** the circumference of the small apertures (3) has a plurality of curved sections, preferably only curved sections.

7. Screen according to one of the preceding claims, **characterized in that** the circumference of the large apertures (4) has at least one straight section (6), preferably a plurality thereof.

8. Screen according to one of the preceding claims, **characterized in that** the circumference of the large apertures (4) has a plurality of curved sections, preferably only curved sections.

9. Screen according to Claim 8, **characterized in that** at least one section (7) is curved concavely.

10. Screen according to one of the preceding claims, **characterized in that**, at least in some cases, preferably predominantly, only two small apertures (3) open into a large aperture (4).

11. Screen according to one of the preceding claims, **characterized in that**, at least in some cases, preferably predominantly, only three small apertures (3) open into a large aperture (4).

12. Screen according to one of the preceding claims, **characterized in that**, at least in some cases, preferably predominantly, only four small apertures (3) open into a large aperture (4).

13. Screen according to one of the preceding claims, **characterized in that** the large aperture (4) has a polygonal flow cross section.

14. Screen according to one of the preceding claims, **characterized in that** the screen comprises two screen layers (1, 2).

15. Screen according to one of Claims 1 to 13, **characterized in that** the screen comprises more than two screen layers (1, 2).

16. Screen according to one of the preceding claims, **characterized in that** the screen has an overall thickness between 4 and 100 mm, preferably between 10 and 50 mm.

17. Screen according to one of the preceding claims, **characterized in that** the screen openings at the narrowest point have an extent between 1 and 20 mm, preferably between 4 and 12 mm.

18. Screen according to one of the preceding claims, **characterized in that** it is rigidly formed.

19. Screen according to one of the preceding claims, **characterized in that** the screen layers (1, 2) are not composed of the same material, the screen layer (1) that forms the front side of the screen having a higher wear resistance than other screen layers (2).

## Revendications

1. Toile pour le traitement d'une suspension de matière fibreuse appropriée pour la production d'une bande de matière fibreuse, se composant d'au moins deux couches de toile (1, 2) assemblées l'une à l'autre et présentant des passages (3, 4), dans laquelle les passages (3, 4) forment des ouvertures de toile conduisant à travers la toile et les passages (3) d'au moins une couche de toile (1) sont sensiblement plus petits que les passages (4) d'une autre couche de toile (2), dans laquelle plusieurs petits passages (3) d'une couche de toile (1) débouchent pleinement dans un grand passage (4) de l'autre couche de toile (2), **caractérisée en ce que** des parties du pourtour du grand passage (4) sont recouvertes identiquement avec au moins respectivement une partie (5) du pourtour de plusieurs plus petits passages (3).

2. Toile selon la revendication 1, **caractérisée en ce que** la section transversale mouillée des passages (3, 4) d'au moins une couche de toile (1, 2), de préférence de toutes les couches de toile (1, 2), ne présente pas d'angles.

3. Toile selon la revendication 1 ou 2, **caractérisée en ce que** les petits passages (3) présentent une section transversale mouillée circulaire.

4. Toile selon la revendication 1 ou 2, **caractérisée en ce que** les petits passages (3) présentent une section transversale mouillée allongée, en particulier ovale.

5. Toile selon la revendication 4, **caractérisée en ce que** le pourtour des petits passages (3) comporte au moins une, de préférence plusieurs parties droites.

6. Toile selon la revendication 4 ou 5, **caractérisée en ce que** le pourtour des petits passages (3) comporte plusieurs, de préférence exclusivement des parties incurvées.

7. Toile selon l'une quelconque des revendications précédentes, **caractérisée en ce que** le pourtour des grands passages (4) comporte au moins une, de préférence plusieurs parties droites (6).

8. Toile selon l'une quelconque des revendications précédentes, **caractérisée en ce que** le pourtour des grands passages (4) comporte plusieurs, de préférence exclusivement des parties incurvées.

9. Toile selon la revendication 8, **caractérisée en ce qu'**au moins une partie (7) est incurvée de façon concave.

10. Toile selon l'une quelconque des revendications précédentes, **caractérisée en ce que**, dans quelques cas au moins, de préférence la plupart, seuls deux petits passages (3) débouchent dans un grand passage (4).

11. Toile selon l'une quelconque des revendications précédentes, **caractérisée en ce que**, dans quelques cas au moins, de préférence la plupart, seuls trois petits passages (3) débouchent dans un grand passage (4).

12. Toile selon l'une quelconque des revendications précédentes, **caractérisée en ce que**, dans quelques cas au moins, de préférence la plupart, seuls quatre petits passages (3) débouchent dans un grand passage (4).

13. Toile selon l'une quelconque des revendications précédentes, **caractérisée en ce que** le grand passage (4) présente une section transversale mouillée de forme polygonale.

14. Toile selon l'une quelconque des revendications précédentes, **caractérisée en ce que** la toile se compose de deux couches de toile (1, 2).

15. Toile selon l'une quelconque des revendications 1 à 13, **caractérisée en ce que** la toile se compose de plus de deux couches de toile (1, 2).

16. Toile selon l'une quelconque des revendications précédentes, **caractérisée en ce que** la toile présente une épaisseur totale comprise entre 4 et 100 mm, de préférence entre 10 et 50 mm.

17. Toile selon l'une quelconque des revendications précédentes, **caractérisée en ce que** les ouvertures de toile présentent, à leur endroit le plus étroit, une extension comprise entre 1 et 20 mm, de préférence entre 4 et 12 mm.

18. Toile selon l'une quelconque des revendications précédentes, **caractérisée en ce qu'**elle est rigide.

19. Toile selon l'une quelconque des revendications précédentes, **caractérisée en ce que** les couches de toile (1, 2) ne sont pas composées du même matériau, dans laquelle la couche de toile (1) formant la face avant de la toile présente une plus grande résistance à l'usure que d'autres couches de toile (2).
